(19) **Europäisches Patentamt**
**European Patent Office**
**Office européen des brevets**

(11) **EP 1 916 096 B1**

(12) **EUROPÄISCHE PATENTSCHRIFT**

(45) Veröffentlichungstag und Bekanntmachung des Hinweises auf die Patenterteilung:
**26.05.2010 Patentblatt 2010/21**

(51) Int Cl.:
*B32B 7/02* (2006.01)   *B32B 27/36* (2006.01)
*B41F 33/00* (2006.01)   *B65D 65/40* (2006.01)
*G09F 3/03* (2006.01)   *G06K 19/16* (2006.01)

(21) Anmeldenummer: **07020475.5**

(22) Anmeldetag: **19.10.2007**

(54) **Heißprägbare Polyesterfolie**

Heat embossable polyester film

Feuille de polyester pouvant être estampée à chaud

(84) Benannte Vertragsstaaten:
**DE FR GB IT LU**

(30) Priorität: **28.10.2006 DE 102006050797**

(43) Veröffentlichungstag der Anmeldung:
**30.04.2008 Patentblatt 2008/18**

(73) Patentinhaber: **Mitsubishi Polyester Film GmbH**
**65203 Wiesbaden (DE)**

(72) Erfinder:
• **Konrad, Matthias, Dr.**
**65719 Hohfheim (DE)**

• **Kuhmann, Bodo**
**65594 Runkel (DE)**
• **Hilkert, Gottfried, Dr.**
**55291 Saulheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 0 945 256    EP-A- 1 291 155**
**US-A- 4 091 150    US-A- 5 728 347**
**US-A- 5 800 911**

**Beschreibung**

Gebiet der Erfindung

Die Erfindung betrifft eine transparente, heißprägbare, biaxial orientierte Polyesterfolie, umfassend eine Basisschicht (B) und beidseitig auf dieser Basisschicht aufgebrachte Deckschichten (A) und (C), wobei die Deckschicht (A) eine amorphe Deckschicht ist, die ihrerseits mit einer Beschichtung versehen ist, und wobei die Deckschicht (C) eine kristalline Deckschicht ist. Die Erfindung begriff weiterhin ein Verfahren für die Herstellung der Folie und ihre Verwendung.

Hintergrund

Hologramme werden für dekorative Verpackungen, Sicherheitsmerkmale und verschiedene andere Anwendungen eingesetzt. Das Hologramm entsteht an strukturierten Oberflächen, die durch Erhitzen und Druck in ein Substrat eingeprägt worden sind. Meistens werden diese Strukturen anschließend metallisiert. Zur Herstellung solcher Hologramme werden oft Polyesterfolien mit einer dicken Acrylatschicht (0,5 bis 2 $\mu$m) verwendet, wobei die Acrylatschicht in einem Off-line-Prozess, d. h, nach der Folienherstellung aufgebracht wird.

Stand der Technik

In der US-A-4,913,858 werden die Anforderungen an eine Off-line-Beschichtung für Prägefolien zur Hologrammherstellung beschrieben. Nachteil ist der benötigte zweite Verarbeitungsschritt, der zu zusätzliche Kosten führt.
Die US-A-4,091,150, die US-A-5,728,347 und die US-A-5,800,150 beschreiben bereits Polyesterfolien aus einer Kombination von mehreren Schichten und deren Verwendung zum Herstellen von Klebebändern, von Behältern und als Ersatz für Aluminiumfolien. Die einzelnen Schichten in den bekannten Polyesterfolien sind aber im Wesentlichen kristallin.
In den EP-A-1 291 154 und EP-A-1 291 155 wird eine beschichtete prägbare Polyesterfolie beschrieben, bei der die Beschichtung in-line vor der Querstreckung aufgebracht wird. Die Beschichtung besteht aus einem Styrol-Acrylat-Copolymer oder einem Sulfopolyester. Die Dicke der Beschichtung liegt zwischen 0,1 und 0,4 $\mu$m. Über die Regenerierbarkeit der Folie und die Rückführung in die Folienherstellung wird keine Aussage getroffen.
EP-A-115 033 beschreibt eine Polyestermehrschichtfolie mit thermoplastisch prägbarer Innenschicht. Die Außenschichten der Folie bestehen aus Polyethylenterephthalat, die Mittelschicht aus einem Copolyester aus Ethylenterephthalat- und Ethylenisophthalateinheiten. Die Mittelschicht macht den Hauptteil der Dicke aus, so dass die mechanische Festigkeit dieser Folie deutlich niedriger ist als die von Folie aus reinem Polyethylenterephthalat. Ein weiterer Nachteil dieser Folie ist, dass die Dicke der Deckschicht relativ groß ist und im Bereich der Prägetiefe von Hologrammen liegt. Dadurch kann keine gute räumliche Auflösung der Prägung erreicht werden.
In der EP-A-1 138 480 wird eine biaxial orientierte, siegelfähige Polyesterfolie mit einer Basisschicht und einer amorphen siegelfähigen Deckschicht beschrieben. Die siegelfähige Deckschicht hat eine Siegelanspringtemperatur von maximal 110 °C und eine Siegelnahtfestigkeit von mindestens 1,3 N/15 mm Folienbreite. Solch eine Folie lässt sich nicht als Heißprägefolie einsetzen, da die Siegelschicht bei den verwendeten Prozesstemperaturen von größer 120 °C an den Prägewalzen klebt.

Aufgabe

Es wäre wünschenswert, eine Folie zur Verfügung stellen zu können, die direkt, ohne einen off-line-Schritt, prägbar ist. Dies würde zur Einsparung eines Prozessschritts und damit von Kosten führen. Ein Problem stellen dann aber die für die Prägung benötigten Schichtdicken dar, die mit den Standardbeschichtungsverfahren, die in der Polyesterfolienproduktion eingesetzt werden, nicht erzielt werden können. Weiterhin würden diese Beschichtungen zu Problemen bei der Rückführung des Regenerats in die Folienherstellung führen.
Aufgabe der vorliegenden Erfindung war es dementsprechend, eine heißprägbare, biaxial orientierte Polyesterfolie bereitzustellen, die die Nachteile der Folien nach dem Stand der Technik nicht aufweist und sich insbesondere durch

- geringe Haftneigung gegenüber sich selbst und gegenüber Metall,
- gutes Prägeverhalten und
- einfache Herstellbarkeit

auszeichnet.

Lösung der Aufgabe

Überraschenderweise hat sich gezeigt, dass eine coextrudierte Folie mit amorpher Deckschicht, die oft als Siegelfolie eingesetzt wird, auch bei hohen Temperaturen keine Haftung mehr aufweist, wenn die amorphe Schicht mit einer geeigneten sehr dünnen Beschichtung abgedeckt wird. Die Weiterverarbeitungseigenschaften können dann gegebenenfalls über die der amorphen Deckschicht gegenüberliegende Deckschicht eingestellt werden.

Die Aufgabe wird erfindungsgemäß gelöst durch eine transparente, biaxial orientierte, heißprägbare Polyesterfolie mit einer Basisschicht (B) und beidseitig auf dieser Basisschicht aufgebrachten Deckschichten (A) und (C), wobei die Deckschicht (A) eine amorphe Deckschicht ist, die ihrerseits mit einer Beschichtung versehen ist, und wobei die Deckschicht (C) eine kristalline Deckschicht ist, wobei

a) die Kristallinität der amorphen Deckschicht (A), ausgedrückt als das Verhältnis der Signale bei 1040 cm$^{-1}$ und 1337 cm$^{-1}$ im ATR-Spektrum, größer als 2,2 ist,
b) die Beschichtung auf der Deckschicht (A) eine Dicke von 0,01 bis 0,1 $\mu$m aufweist,
c) die Beschichtung vernetzt ist,
d) die Folie bei hoher Temperatur nicht gegen sich selbst oder Metall haftet.
Darüber hinaus ist die erfindungsgemäße Folie bevorzugt so gestaltet, dass
e) die amorphe Deckschicht (A) eine Dicke von 0,5 bis 5,0 $\mu$m aufweist,
f) die amorphe Deckschicht (A) weniger als 0,01 Gew.-% externe Partikel enthält (bezogen auf das Gesamtgewicht der Deckschicht (A)),
g) die Kristallinität der kristallinen Deckschicht (C), ausgedrückt als das Verhältnis der Signale bei 1040 cm$^{-1}$ und 1337 cm$^{-1}$ im ATR-Spektrum, kleiner als 1,2 ist,
h) die Deckschicht (C) Partikel in einer Konzentration von 0,05 bis 0,5 Gew.-% enthält,
i) der Glanz (gemessen bei 20°) der Deckschicht (A) größer als 100 ist,
j) die Trübung der Folie kleiner als 8 % ist

Detailbeschreibung

**Amorphe Deckschicht (A)**

Die bevorzugt durch Coextrusion auf die Basisschicht (B) aufgebrachte amorphe Deckschicht (A) besteht bevorzugt im Wesentlichen aus Copolyestern, die überwiegend aus Isophthal- und Terephthalsäure-abgeleiteten Einheiten und aus Ethylenglykol-abgeleiteten Einheiten zusammengesetzt sind. Die restlichen Monomereinheiten stammen aus anderen aliphatischen, cycloaliphatischen oder aromatischen Diolen bzw. Dicarbonsäuren wie sie weiter unten für die Basisschicht (B) beschrieben sind. Die bevorzugten Copolyester sind solche, die aus Ethylenterephthalat- und Ethylenisophthalat-Einheiten aufgebaut sind. Der Anteil an Ethylenterephthalat beträgt bevorzugt 60 bis 95 Mol-% und der entsprechende Anteil an Ethylenisophthalat 40 bis 5 Mol-%. Besonders bevorzugt sind Copolyester, bei denen der Anteil an Ethylenterephthalat 65 bis 90 Mol-% und der entsprechende Anteil an Ethylenisophthalat 35 bis 10 Mol-% beträgt, und ganz bevorzugt sind Copolyester, bei denen der Anteil an Ethylenterephthalat 70 bis 85 Mol-% und der entsprechende Anteil an Ethylenisophthalat 30 bis 15 Mol-% beträgt.

Die amorphe Deckschicht (A) enthält bevorzugt weniger als 0,01 Gew.-% (bezogen auf die Masse der Deckschicht (A)), insbesondere gar keine externen Partikel. In diesem Fall ist die Prägbarkeit am besten.

Die amorphe Deckschicht (A) weist eine Dicke von 0,5 bis 5,0 $\mu$m, bevorzugt von 0,6 bis 4,5 $\mu$m und besonders bevorzugt von 0,7 bis 4,0 $\mu$m, auf. Ist die Deckschichtdicke kleiner als 0,5 $\mu$m, so ist die mögliche Prägetiefe zu gering. Aus wirtschaftlichen Gründen sollte die Deckschichtdicke 5 $\mu$m nicht überschreiten.

Das Verhältnis der Signale bei 1040 cm$^{-1}$ und 1337 cm$^{-1}$ im ATR-Spektrum der amorphen Deckschicht (A) der Folie ist größer 2,2. Ein solches Signalverhältnis wird erhalten, wenn der Anteil der amorphen Bereiche groß ist. Dies ist vor allem dann der Fall, wenn die Deckschicht aus den oben angegebenen Copolyestern aufgebaut ist und bevorzugt der Ethylenisophthalat-Gehalt 5 Mol-% und größer ist. Ist das Verhältnis kleiner als 2,2, so ist der Anteil der kristallinen Bereiche zu hoch und die Prägbarkeit der Schicht nicht zufriedenstellend. Dies ist vor allem dann der Fall, wenn der Ethylenisophthalat-Gehalt der Deckschicht 5 Mol-% unterschreitet. Die Aufnahme des ATR-Spektrums kann direkt an der beschichteten Folie vorgenommen werden, solange die Dicke der Beschichtung 0,1 $\mu$m nicht übersteigt; es wird angenommen, dass die Beschichtung bis zu einer Dicke von 0,1 $\mu$m keinen Einfluss auf das Spektrum der Deckschicht hat. Sollten hieran Zweifel bestehen, kann die Beschichtung vor der Aufnahme des ATR-Spektrums entfernt werden.

Der Glanz der Deckschicht (A) ist größer als 100, bevorzugt größer als 125 und besonders bevorzugt größer als 150. Ist der Glanz kleiner als 100, so ist ein in die Folie geprägtes Hologramm nicht brillant.

## Beschichtung

Als Beschichtung auf der Deckschicht (A) wird eine Acrylatbeschichtung verwendet. Die bevorzugt verwendeten Acrylcopolymeren bestehen im Wesentlichen aus mindestens 50 Gew.-% eines oder mehrerer polymerisierbarer acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist.

Die acrylische Komponente der Copolymeren ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C-Atome enthält, wie z. B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C 1 bis C4) abgeleitet sind, insbesondere Ethylacrylat, ergeben zusammen mit einem niederen Alkylmethacrylat eine besonders gute Haftung auf der Polyesterfolie. Ganz besonders bevorzugt werden Copolymere aus einem Alkylacrylat, z. B. Ethylacrylat oder Butylacrylat, zusammen mit einem Alkylmethacrylat, z. B. Methylmethacrylat, insbesondere in einer Gesamtmenge von 70 bis 95 Gew.-%, eingesetzt. Das Acrylatcomonomere solcher Acryl-/Methacryl-Kombinationen ist vorzugsweise in einem Anteil von 15 bis 65 Mol-% anwesend und das Methacrylat- Comonomere vorzugsweise in einem Anteil, der im allgemeinen um 5 bis 20 Mol-% größer ist als der Anteil des Acrylatcomonomeren. Das Methacrylat ist vorzugsweise in einem Anteil von 35 bis 85 Mol-% in der Kombination enthalten.

Die Beschichtung muss vernetzt sein, um das Haften der Folie am Prägewerkzeug zu verhindern, Die Beschichtung selbst ist nicht prägbar und darf deshalb höchstens 0,09 $\mu$m dick sein, damit die Folie prägbar ist.

Zur Ausbildung von Vernetzungen können geeignete Comonomere eingesetzt werden wie z. B. N-Methylolacrylamid, N-Methylolmethacrylamid und die entsprechenden Ether; Epoxidmaterialien wie z. B. Glycidylacrylat, Glycidylmethacrylat und Allylglycidylether; Carboxylgruppen enthaltende Monomere wie z. B. Crotonsäure, Itaconsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat; Amide wie z. B. Acrylamid, Methacrylamid oder Maleinsäureamid und Isocyanate wie z. B. Vinylisocyanat oder Allylisocyanat. Von den hier genannten vernetzenden Comonomeren werden N-Methylolacrylamid und N-Methylolmethacrylamid bevorzugt, und zwar in erster Linie deswegen, weil Copolymerenketten, die eines dieser Monomere enthalten, unter der Einwirkung von erhöhten Temperaturen zur Kondensation miteinander und somit zur Ausbildung der gewünschten intermolekularen Vernetzungen befähigt sind. Die Vernetzung der bevorzugten Acrylatbeschichtung kann aber auch durch die Anwesenheit eines fremden Vernetzungsmittels wie z. B. eines Melamin- oder Harnstoff-Formaldehyd-Kondensationsproduktes erzielt werden. Die Konzentration des Vernetzers beträgt zweckmäßigerweige 1 bis 20 Gew.-%, bevorzugt 2 bis 15 Gew.%, besonders bevorzugt 3 bis 10 Gew.-% (jeweils bezogen auf das Gesamtgewicht des Beschichtungspolymeren (Copolymer plus Vemetzer).

Zur Beschichtung wird die oben genannte acrylische Beschichtingszusammensetzung in einem protischen Lösungsmittel, bevorzugt Wasser, emulgiert und als Emulsion auf die Folie aufgetragen. Anschließend wird das Lösungsmittel, beispielsweise durch die Temperatureinwirkung in der Querstreckung der Folie verflüchtigt. Die Konzentration der Beschichtungszusammensetzung in der Beschichtungslösung beträgt zweckmäßigerweise 2 bis 15 Gew.-% (bezogen auf das Gewicht der fertigen Beschichtungslösung), bevorzugt 3 bis 12 Gew.-% und besonders bevorzugt 4 bis 10 Gew.%.

Die acrylische Beschichtungszusammensetzung (Emulsion) wird zweckmäßigerweise in einer Menge von 1 bis 10 g/m$^2$ Folienoberfläche aufgetragen, bevorzugt 1,2 bis 8 g/m$^2$ und besonders bevorzugt 1,4 bis 6 g/m$^2$.

Die Dicke der getrockneten Beschichtung liegt im Bereich von 0,01 bis 0,09 $\mu$m. Diese Dicke reicht aus, um ein Haften der amorphen Schicht am Prägewerkzeug zu verhindern. Dickere Beschichtungen führen zu einem schlechteren Prägeergebnis, da die Beschichtung selbst nicht prägbar ist, sondern als Schutzschicht dient.

## Verwendete Polymere für die Basisschicht (B) und für die Deckschicht (C)

Die Basisschicht (B) und die Deckschicht (C) der Folie bestehen bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zur mindestens 90 Mol-%, bevorzugt mindestens 95 Mol%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$)-Alkandisäuren besonders geeignet, wobei der Alkanteil geradkettig oder verzweigt sein kann.

Die Herstellung der Polyester kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salze umgesetzt werden. Die Zwischenprodukte werden dann in Gegenwart allgemein üblicher Polykondensationskatalysatoren wie Antimontrioxid oder Titan-Salze polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Erfindungsgemäße Polyester sind als Handelsprodukte erhältlich.

Die Basisschicht (B) kann zusätzlich übliche Additive wie beispielsweise UV-Stabilisatoren, Hydrolysestabilisatoren, Antiblockmittel (z. B. über das Regenerat) enthalten.

Die Deckschicht (C) kann zusätzlich übliche Additive wie beispielsweise Stabilisatoren enthalten. Diese Additive werden zweckmäßig dem Polymer bzw. der Polymermischung bereits vor dem Aufschmelzen zugesetzt. Als Stabilisatoren werden vorteilhaft beispielsweise Phosphorverbindungen wie Phosphorsäure oder Phosphorsäureester eingesetzt.

Die Deckschicht (C) ist zur Verbesserung des Wickelverhaltens und der Verarbeitbarkeit mit inerten, das heißt zugesetzten Partikeln gefüllt. Typische Partikel, die in der Deckschicht (C) verwendet werden, sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder partikelförmige Polymere wie z. B. vernetzte Polystyrol- oder Arcrylat-Partikel.

Die Konzentration der inerten Partikel in der Deckschicht (C) liegt zwischen 0,05 und 0,50 Gew.-% (bezogen auf die Masse der Deckschicht) und richtet sich im Wesentlichen nach den zu erzielenden optischen Eigenschaften der Folie. Die Größe der Partikel ($d_{50}$-Wert) liegt bevorzugt im Bereich zwischen 1,0 und 5,0 $\mu$m.

Das Verhältnis der Signale bei 1040 cm$^{-1}$ und 1337 cm$^{-1}$ im ATR-Spektrum der kristallinen Deckschicht (C) der Folie ist kleiner 1,2. Ein solches Signalverhältnis wird erhalten, wenn der Anteil der amorphen Bereiche klein ist. Dies wird erreicht, wenn die Deckschicht aus den oben genannten Polymeren bevorzugt in den dort genannten molaren Anteilen aufgebaut ist. Ist das Verhältnis größer als 1,2, so ist der Anteil der amorphen Bereiche zu hoch und die Schicht ist zu weich. Dies kann vor allem dann passieren, wenn der Anteil an Comonomeren in dem verwendeten Polyester zu groß wird.

Die mehrschichtige Folie

Bei der Folie ist die Dicke der Deckschichten (A) und (C) im allgemeinen größer als 0,4 $\mu$m und liegt bevorzugt im Bereich von 0,5 bis 10,0 $\mu$m, insbesondere im Bereich von 0,8 bis 9,0 $\mu$m und besonders bevorzugt im Bereich von 1,0 bis 8,0 $\mu$m.

Die Gesamtdicke der erfindungsgemäßen Polyesterfolie kann innerhalb weiter Grenzen variieren. Sie beträgt bevorzugt 5 bis 500 $\mu$m, insbesondere 7 bis 300 $\mu$m, vorzugsweise 10 bis 100 $\mu$m.

Erfindungsgemäß ist die Folie dreischichtig und umfasst die Basisschicht (B), die amorphe Deckschicht (A) und die Deckschicht (C) (A-B-C).

Die Trübung der Folie ist kleiner als 8 %, bevorzugt kleiner 6 % und besonders bevorzugt kleiner 4 %.

Die Folie haftet bei hoher Temperatur nicht gegen sich selbst oder Metall. So beträgt die Haftungsneigung sowohl gegen sich selbst als auch gegen Metall kleiner 1,0 N/15 mm, bevorzugt kleiner 0,7 N/15 mm und besonders bevorzugt kleiner 0,4 N/15 mm.

Verfahren zur Herstellung

Die Erfindung betrifft auch ein Verfahren zur Herstellung der erfindungsgemäßen Polyesterfolie nach dem an sich aus der Literatur bekannten Coextrusionsverfahren.

Im Rahmen dieses Verfahrens wird so vorgegangen, dass die den einzelnen Schichten A, B und C der Folie entsprechenden Schmelzen durch eine Flachdüse coextrudiert werden, die so erhaltene Folie zur Verfestigung auf einer oder mehreren Walzen abgezogen wird, die Folie anschließend biaxial gestreckt, die biaxial gestreckte Folie thermofixiert und gegebenenfalls an der zur Behandlung vorgesehenen Oberflächenschicht coronabehandelt wird.

Die biaxiale Verstreckung wird im allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Dies führt zu einer Orientierung der Molekülketten. Das Verstrecken in Längsrichtung lässt sich mit Hilfe mehrerer entsprechend dem angestrebten Streckverhältnis verschieden schnell laufender Walzen durchführen. Zum Querverstrecken benutzt man allgemein einen entsprechenden Kluppenrahmen.

Zunächst werden wie beim Coextrusionsverfahren üblich das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130 °C und die Querstreckung bei einer Temperatur im Bereich von 90 bis 150 °C durchgeführt. Das Längsstreckverhältnis liegt allgemein im Bereich von 2,5:1 bis 6:1, bevorzugt von 3,0:1 bis 5,5:1. Das Querstreckverhältnis liegt allgemein im Bereich von 3,0:1 bis 5,0:1, bevorzugt von 3,5:1 bis 4,5:1.

Zweckmäßigerweise vor der Querstreckung wird die Oberfläche der amorphen Deckschicht (A) der Folie nach den bekannten Verfahren, z. B. mittels Meyer-Rod oder durch Reverse-Gravure-Roll-Coating, mit der oben beschriebenen acrylischen Beschichtungsemulsion in-line beschichtet.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Bevorzugt wird nach der biaxialen Streckung die nicht beschichtete Oberfläche der Folie nach einer der bekannten Methoden corona- oder flammbehandelt. Die Behandlungsintensität liegt im allgemeinen im Bereich von über 50 mN/m.

Eigenschaften

Die nachstehende Tabelle (Tabelle 1) fasst die wichtigsten erfindungsgemäßen Folieneigenschaften noch einmal zusammen.

**Tabelle 1**

| Eigenschaft | bevorzugt | besonders bevorzugt | ganz besonders bevorzugt | Einheit | Messmethode/ Bemerkung |
|---|---|---|---|---|---|
| Dicke der Beschichtung | 0,01-0,1 | 0,015-0,09 | 0,02-0,08 | $\mu$m | |
| Kristallinität der amorphen Deckschicht (A) | > 2,2 | > 2,3 | > 2,4 | | Verhältnis der ATR-Banden bei 1040 und 1337 cm$^{-1}$ |
| Kristallinität der kristallinen Deckschicht (C) | < 1,2 | <1,1 | < 1,0 | | Verhältnis der ATR-Banden bei 1040 und 1337 cm$^{-1}$ |
| Haftungsneigung | < 1,0 | < 0,7 | < 0,4 | N/15mm | 180 °C, 0,5 s, 4 bar |
| Glanz der Deckschicht (A) | >100 | > 125 | > 150 | | DIN 67530, Messwinkel 20° |
| Trübung | < 8 | < 6 | < 4 | % | ASTM D 1003 - 61 Methode A |

Im folgenden wird die Erfindung anhand von Beispielen näher erläutert. Für die Bestimmung der Eigenschaften wurden die folgenden Messmethoden verwendet:

**Messung der Kristallinität**

Die Kristallinität der jeweiligen Folienseite wird aus dem Verhältnis der Intensitäten der Banden bei 1040 cm$^{-1}$ und 1337 cm$^{-1}$ im ATR-Spektrum bestimmt (ATR = Attenuated Total Reflection), wobei die Intensitäten auf die Bande bei 1117 cm$^{-1}$ normiert sind. Die Bande bei 1040 cm$^{-1}$ ist amorphem Polyester, die bei 1337 cm$^{-1}$ ist kristallinem Polyester zuzuordnen (Polymer Letters Edition, Vol. 12 (1974), S. 13-19).

Für amorphe Schichten gilt: $\dfrac{I_{1040\,cm^{-1}}}{I_{1337\,cm^{-1}}} > 2,2$

Für kristalline Schichten gilt: $\dfrac{I_{1040\,cm^{-1}}}{I_{1337\,cm^{-1}}} < 1,2$

Die Messung erfolgt mit einem IR-Spektrometer IFS28 der Firma Bruker (Karlsruhe, DE) unter Verwendung eines Diamant-ATR-Kristalls.

Die Aufnahme des ATR-Spektrums kann direkt an der beschichteten Folie vorgenommen werden, solange die Dicke der Beschichtung 0,1 μm nicht übersteigt; es wird angenommen, dass die Beschichtung bis zu einer Dicke von 0,1 μm keinen Einfluss auf das Spektrum der Deckschicht hat. Sollten hieran Zweifel bestehen, kann die Beschichtung vor der Aumahme des ATR-Spektrums entfernt werden.

**Messung des mittleren Partikeldurchmessers d$_{50}$**

Die Bestimmung des mittleren Partikeldurchmessers d$_{50}$ wird mittels Laser auf einem Master Sizer (Malvern Instruments, UK) nach der Standardmethode durchgeführt (andere Messgeräte sind z. B. Horiba LA 500 (Horiba Ltd., JP) oder Helos (Sympatec GmbH, DE), welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des d$_{50}$-Wertes. Der d$_{50}$-Wert wird dabei definitionsgemäß aus der (relativen) Summenkurve der Partikelgrößenverteilung bestimmt: Der Schnittpunkt des 50 Gew.%-Ordinatenwertes mit der Summenkurve liefert auf der Abszissenachse den gewünschten d$_{50}$-Wert.

**Trübung**

Die Trübung wird nach ASTM D 1003 - 61 Methode A bestimmt.

**Haftungsneigung gegenüber sich selbst und Metall**

Zur Bestimmung der Haftungsneigung der Folie gegenüber sich selbst werden zwei 15 mm breite Folienstreifen mit der amorphen Seite aufeinander gelegt und bei 180 °C, einer Zeit von 0,5 s und einem Druck von 4 bar (Gerät: Brugger Typ NDS, einseitig beheizte Siegelbacke) zusammengepresst. Die Haftung wird nach der 180°-Peel-Methode bestimmt. Zur Bestimmung der Haftungsneigung der Folie gegenüber Metall wird ein 15 mm breiter Folienstreifen mit der amorphen Seite auf einen gleichgroßen Streifen Blech aus ECCS-Stahl gelegt und die oben beschriebene Messung durchgeführt.

**Glanz**

Der Glanz wird nach DIN 67530 bestimmt (20°-Einstrahlwinkel).

**SV-Wert (Standard Viscosity)**

Die Standardviskosität SV (DCE) wird, angelehnt an DIN 53726, bei 25 °C in Dichloressigsäure gemessen. Die intrinsische Viskosität (IV) von Polyethylenterephthalat berechnet sich wie folgt aus der Standardviskosität

$$IV = [\eta] = 6,907 * 10^{-4}\ SV\ (DCE) + 0,063096\ [dl/g]$$

**Verarbeitungsverhalten der Folie**

Das Verhalten der Folie wurde visuell bei der Verarbeitung beurteilt.

++: keine Klebeneigung an Prägewalzen
-: Klebeneigung an Prägewalzen

**Beispiel 1**

Zur Herstellung der nachfolgend beschriebenen Folie wurden folgende Ausgangsmaterialien verwendet:

Deckschicht (A):

100 Gew.-% Copolyester aus 82 Mol-% Ethylenterephthalat und 18 Mol-% Ethylen-isophthalat mit einem SV-Wert von 800

Basisschicht (B):

100 Gew.-% Polyethylenterephthalat mit einem SV-Wert von 800

Deckschicht (C), Mischung aus:

80 Gew.-% Polyethylenterephthalat mit einem SV-Wert von 800
20 Gew.-% Masterbatch aus 99 Gew.-% Polyethylenterephthalat (SV-Wert von 800) und 1 Gew.-% Sylobloc 44 H (synthetisches $SiO_2$ der Fa. Grace, $d_{50}$: 2,5 $\mu$m)

Die o. g. Rohstoffe wurden in je einem Extruder pro Schicht aufgeschmolzen und durch eine dreischichtige Breitschlitzdüse auf eine gekühlte Abzugswalze extrudiert. Die so erhaltene amorphe Vorfolie wurde dann zunächst längsverstreckt. Die längsgestreckte Folie wurde in einem Coronaentladegerät coronabehandelt und danach durch Reversgravurbeschichtung mit folgender Zusammensetzung auf der Deckschicht (A) beschichtet:
5% Gew.-% Acrylat-Copolymer, bestehend aus 60 Gew.-% Methylmethacrylat, 35 Gew.-% Ethylacrylat und 5 Gew.-% N-Methylolacrylamid in Wasser
Nach der Beschichtung wurde die Folie quergestreckt, fixiert und aufgerollt (Enddicke der Folie 12 $\mu$m, Deckschichten je 1 $\mu$m). Die Bedingungen in den einzelnen Verfahrensschritten waren:

| | | |
|---|---|---|
| Längsstreckung: | Temperatur: | 80 - 120 °C |
| | Längsstreckverhältnis: | 4,0 |
| Querstreckung: | Temperatur: | 80-135 °C |
| | Querstreckverhältnis: | 4,2 |
| Fixierung: | | 2 s bei 235 °C |

Die Dicke der trockenen Beschichtung betrug ca. 0,025 $\mu$m.
Die Eigenschaften der so erhaltenen Folie sind in den Tabellen 2 und 3 widergegeben.

**Beispiel 2**

Im Vergleich zu Beispiel 1 wurde jetzt eine 50 $\mu$m dicke Folie produziert. Die Deckschichtdicke der amorphen Schicht (A) betrug 5 $\mu$m und diejenige der kristallinen Schicht (C) betrug 3 $\mu$m.
Die Dicke der trockenen Beschichtung betrug ca. 0,03 $\mu$m.

**Beispiel 3**

Im Vergleich zu Beispiel 1 wurde jetzt der Polyester der amorphen Deckschicht (A) geändert:

Deckschicht (A):

100 Gew.-% Copolyester aus 85 Mol-% Ethylenterephthalat und 15 Mol-% Ethylen-isophthalat mit einem SV-

EP 1 916 096 B1

Wert von 800

Gegenüber Beispiel 1 hat sich die Klebeneigung bei hohen Temperaturen verringert.

**Vergleichsbeispiel 1**

Das Vergleichsbeispiel 1 wurde entsprechend Beispiel 4 der EP-A-1 291 155 produziert. Dazu wurde analog zu Beispiel 1 eine AB-Folie mit folgendem Schichtaufbau hergestellt:

Deckschicht (A):

100 Gew.-%    Copolyester aus 82 Mol-% Ethylenterephthalat und 18 Mol-% Ethylen-isophthalat mit einem SV-Wert von 800

Basisschicht (B):

94 Gew.-%    Polyethylenterephthalat mit einem SV-Wert von 800
6 Gew.-%    Masterbatch aus 99 Gew.-% Polyethylenterephthalat (SV-Wert von 800) und 1,0 Gew.-% Sylobloc 44 H (synthetisches $SiO_2$ der Fa. Grace, $d_{50}$: 2,5 $\mu$m)

Die längsgestreckte Folie wurde in einem Coronaentladegerät coronabehandelt und danach durch Reversgravurbeschichtung mit folgender Zusammensetzung auf der Deckschicht (A) beschichtet:

49 Gew.-% Setalux 37-3372 (Akzo Nobel)
0,01 Gew.-% Surfinol 440 (Air Products)
1,2 Gew.-% Propylenglykolphenylether
49 Gew.-% Wasser

Die Endfolie hatte eine Dicke von 12 $\mu$m. Die Dicke der Deckschicht (A) betrug 0,6 $\mu$m. Die Dicke der trockenen Beschichtung betrug 0,4 $\mu$m.
Untersuchungen haben gezeigt, dass beim Prägen die Beschichtung, nicht aber die Deckschicht verformt wird.

**Vergleichsbeispiel 2**

Im Vergleich zu Vergleichsbeispiel 1 wurde die Dicke der Beschichtung auf 0,1 $\mu$m reduziert. Die so erhaltene Folie zeigte ein nur unzureichendes Prägeverhalten. Das Hologramm war undeutlich.
Die wichtigsten Eigenschaften der so hergestellten Folien sind in der nachfolgenden Tabelle 2 zusammengefasst.

**Tabelle 2**

|  | B1 | B2 | B3 | V1 | V2 |
|---|---|---|---|---|---|
| Foliendicke ($\mu$m) | 12 | 50 | 12 | 12 | 12 |
| Dicke der Deckschicht (A) ($\mu$m) | 1 | 5 | 1 | 0,6 | 0,6 |
| Dicke der trockenen Beschichtung ($\mu$m) | 0,025 | 0,03 | 0,025 | 0,4 | 0,1 |
| Kristallinität der Deckschicht (A) | 3,4 | 3,5 | 3,2 | 3,4 | 3,4 |
| Kristallinität der Deckschicht (C) | 0,8 | 0,8 | 0,8 | 0,8 | 0,8 |
| Haftung Deckschicht (A) gegen sich selbst (N/15 mm) | < 0,5 | < 0,5 | < 0,5 | 2,1 | 1,7 |
| Trübung (%) | 2,0 | 4,1 | 2,1 | 1,9 | 2,0 |
| Glanz der Deckschicht (A) | 160 | 153 | 159 | 165 | 162 |
| Verarbeitungsverhalten | ++ | ++ | ++ | - | - |

9

**Patentansprüche**

1. Mehrschichtige biaxial orientierte, transparente, heißprägbare Polyesterfolie mit einer Basisschicht (B), einer amorphen Deckschicht (A), welche sich auf einer Oberfläche der Basisschicht (B) befindet, mit einer Beschichtung auf dieser Deckschicht (A) und einer kristallinen Deckschicht (C), welche sich auf der anderen; Oberfläche der Basisschicht (B) befindet, **dadurch gekennzeichnet, dass**

   a) die Kristallinität der amorphen Deckschicht (A), ausgedrückt als das Verhältnis der Signale bei 1040 cm$^{-1}$ und 1337 cm$^{-1}$ im ATR-Spektrum, größer als 2,2 ist,
   b) die Beschichtung auf der Deckschicht (A) eine Dicke von 0,01 bis 0,09 $\mu$m aufweist,
   c) die Beschichtung vernetzt ist,
   d) die Folie bei hoher Temperatur nicht gegen sich selbst oder Metall haftet,

2. Folie nach Anspruch 1, **dadurch gekennzeichnet, dass** die amorphe Deckschicht (A) eine Dicke von 0,5 bis 5,0 $\mu$m aufweist.

3. Folie nach Anspruch 1 oder 2, **dadurch gekennzeichnet, dass** die amorphe Deckschicht

   (A) weniger als 0,01 Gew.-% externe Partikel enthält, bezogen auf das Gesamtgewicht der Deckschicht (A).

4. Folie nach Anspruch 1, 2 oder 3, **dadurch gekennzeichnet, dass** die Kristallinität der kristallinen Deckschicht (C), ausgedrückt als das Verhältnis der Signale bei 1040 cm$^{-1}$ und 1337 cm$^{-1}$ im ATR-Spektrum, kleiner als 1,2 ist.

5. Folie nach einem der Ansprüche 1 bis 4, **dadurch gekennzeichnet, dass** die Deckschicht (C) Partikel in einer Konzentration von 0,05 bis 0,5 Gew.-% enthält.

6. Folie nach einem der Ansprüche 1 bis 5, **dadurch gekennzeichnet, dass** der Glanz (gemessen bei 20°) der Deckschicht (A) größer als 100 ist.

7. Folie nach einem der Ansprüche 1 bis 6, **dadurch gekennzeichnet, dass** die Trübung der Folie kleiner als 8 % ist.

8. Folie nach einem der Ansprüche 1 bis 7, **dadurch gekennzeichnet, dass** die Beschichtung auf der Deckschicht (A) eine Acrylatbeschichtung ist.

9. Folie nach einem der Ansprüche bis 8, **dadurch gekennzeichnet, dass** die Acrylatbeschichtung mindestens 50 Gew.-% eines oder mehrerer polymerisierbarer acrylischer und/oder methacrylischer Monomerer und 1 bis 15 Gew.-% eines copolymerisierbaren Comonomeren, das in copolymerisiertem Zustand unter Einwirkung von erhöhter Temperatur mit oder ohne Zusatz eines Venetzungsmittels, zur Ausbildung von intermolekularen Vernetzungen befähigt ist, enthält.

10. Folie nach einem der Ansprüche 1 bis 9, **dadurch gekennzeichnet, dass** in der Deckschicht (C) Partikel enthalten sind, deren mittlerer Durchmesser (d$_{50}$-Wert) im Bereich zwischen 1,0 und 5,0 $\mu$m liegt.

11. Folie nach einem der Ansprüche 1 bis 10, **dadurch gekennzeichnet, dass** die Folie eine Haftungsneigung sowohl gegen sich selbst als auch gegen Metall von kleiner 1,0 N/15 mm aufweist.

12. Verfahren zur Herstellung einer Folie nach Anspruch 1, wobei die den einzelnen Schichten A, B und C der Folie entsprechenden Schmelzen durch eine Flachdüse coextrudiert werden, die so erhaltene Folie zur Verfestigung auf einer oder mehreren Walzen abgezogen wird, die Folie anschließend in Maschinen- und in Querrichtung biaxial gestreckt, die biaxial gestreckte Folie thermofixiert und anschließend aufgewickelt wird, **dadurch gekennzeichnet, dass** für die Deckschicht (A) ein Polyester verwendet wird, bei dem das Verhältnis der Signale bei 1040 cm$^{-1}$ und 1337 cm$^{-1}$ im ATR-Spektrum größer als 2,2 ist und die Folie nach der Streckung in Maschinenrichtung und vor der Streckung in Querrichtung mit einer acrylischen Beschichtungsemulsion beschichtet wird.

13. Verwendung einer Folie nach Anspruch 1 als prägbare Folie.

14. Verwendung nach Anspruch 13 als Verpackungsfolie.

**15.** Verwendung nach Anspruch 13 als Sicherheitsfolie.


**Claims**

**1.** A multilayer biaxially oriented, transparent, hot-embossable polyester film with a base layer (B), an amorphous outer layer (A) located on a surface of the base layer (B), with a coating on this outer layer (A), and a crystalline outer layer (C) located on the other surface of the base layer (B), wherein

  a) the crystallinity of the amorphous outer layer (A), expressed as the ratio of the signals at 1040 cm$^{-1}$ and 1337 cm$^{-1}$ in the ATR spectrum, is greater than 2.2,
  b) the thickness of the coating on the outer layer (A) is from 0.01 to 0.09 $\mu$m,
  c) the coating has been crosslinked,
  d) the film does not adhere to itself or metal at high temperature.

**2.** The film as claimed in claim 1, wherein the thickness of the amorphous outer layer (A) is from 0.5 to 5.0 $\mu$m.

**3.** The film as claimed in claim 1 or 2, wherein the amorphous outer layer (A) comprises less than 0.01 % by weight of external particles, based on the total weight of the outer layer (A).

**4.** The film as claimed in claim 1, 2, or 3, wherein the crystallinity of the crystalline outer layer (C), expressed as the ratio of the signals at 1040 cm$^{-1}$ and 1337 cm$^{-1}$ in the ATR spectrum, is smaller than 1.2.

**5.** The film as claimed in any of claims 1 to 4, wherein the outer layer (C) comprises particles at a concentration of from 0.05 to 0.5 % by weight.

**6.** The film as claimed in any of claims 1 to 5, wherein the gloss (measured at 20°C) of the outer layer (A) is greater than 100.

**7.** The film as claimed in any of claims 1 to 6, whose haze is smaller than 8 %.

**8.** The film as claimed in any of claims 1 to 7, wherein the coating on the outer layer (A) is an acrylate coating.

**9.** The film as claimed in any of claims 1 to 8, wherein the acrylate coating comprises at least 50 % by weight of one or more polymerizable acrylic and/or methacrylic monomers and from 1 to 15 % by weight of a copolymerizable comonomer which in copolymerized condition is capable of generating intermolecular crosslinking on exposure to an elevated temperature with or without addition of a crosslinking agent.

**10.** The film as claimed in any of claims 1 to 9, wherein the outer layer (C) comprises particles whose median diameter (d$_{50}$ value) is in the range from 1.0 to 5.0 $\mu$m.

**11.** The film as claimed in any of claims 1 to 10, whose adhesion both to itself and to metal is smaller than 1.0 N/15 mm.

**12.** A process for production of a film as claimed in claim 1, where the melts corresponding to the individual layers A, B, and C of the film are coextruded through a flat-film die, the resultant film is drawn off for solidification on one or more rolls, the film is then biaxially stretched in machine direction and transversely, and the biaxially stretched film is heat-set and is then wound up, which comprises using, for the outer layer (A), a polyester in which the ratio of the signals at 1040 cm$^{-1}$ and 1337 cm$^{-1}$ in the ATR spectrum is greater than 2.2, and coating the film, after the stretching in machine direction prior to the transverse stretching, with an acrylic coating emulsion.

**13.** The use of a film as claimed in claim 1 as embossable film.

**14.** The use as claimed in claim 13 as a packaging film.

**15.** The use as claimed in claim 13 as security film.

## EP 1 916 096 B1

**Revendications**

1. Feuille de polyester multicouche, orientée biaxialement, transparente, pouvant être estampée à chaud, comportant une couche de base (B), une couche de couverture amorphe (A) qui se trouve sur une surface de la couche de base (B), avec un revêtement sur cette couche de couverture (A) et une couche de couverture cristalline (C) qui se trouve sur l'autre surface de la couche de base (B),
   **caractérisée en ce que**

   a) la cristallinité de la couche de couverture amorce (A), exprimée en rapport des signaux à 1040 cm$^{-1}$ et 1337 cm$^{-1}$ dans le spectre ATR, est supérieure à 2,2,
   b) le revêtement sur la couche de couverture (A) présente une épaisseur de 0,01 à 0,09 $\mu$m,
   c) le revêtement est réticulé,
   d) la feuille n'adhère pas, à haute température, contre elle-même ou un métal.

2. Feuille selon la revendication 1, **caractérisée en ce que** la couche de couverture amorphe (A) présente une épaisseur de 0,5 à 5,0 $\mu$m.

3. Feuille selon la revendication 1 ou 2, **caractérisée en ce que** la couche de couverture amorphe (A) contient moins de 0,01 % en poids de particules externes par rapport au poids total de la couche de couverture (A).

4. Feuille selon la revendication 1, 2 ou 3, **caractérisée en ce que** la cristallinité de la couche de couverture cristalline (C) exprimée en rapport des signaux à 1040 cm$^{-1}$ et 1337 cm$^{-1}$ dans le spectre ATR est inférieure à 1,2.

5. Feuille selon l'une des revendications 1 à 4, **caractérisée en ce que** la couche de couverture (C) contient des particules en une concentration de 0,05 à 0,5 % en poids.

6. Feuille selon l'une des revendications 1 à 5, **caractérisée en ce que** la brillance (mesurée à 20° C) de la couche de couverture (A) est supérieure à 100.

7. Feuille selon l'une des revendications 1 à 6, **caractérisée en ce que** le voile de la feuille est inférieur à 8 %.

8. Feuille selon l'une des revendications 1 à 7, **caractérisée en ce que** le revêtement sur la couche de couverture (A) est un revêtement d'acrylate.

9. Feuille selon l'une des revendications 1 à 8, **caractérisée en ce que** le revêtement d'acrylate contient au moins 50 % en poids d'un ou plusieurs monomères acryliques et/ou méthacryliques polymérisables et 1 à 15 % en poids d'un comonomères copolymérisable qui est capable de former, à l'état copolymérisé, sous l'effet d'une température élevée, avec ou sans addition d'un agent de réticulation, des réticulations intermoléculaires.

10. Feuille selon l'une des revendications 1 à 9,
    **caractérisée en ce que**, dans la couche de couverture (C) sont contenues des particules dont le diamètre moyen (valeur $d_{50}$) se situe dans une plage entre 1,0 et 5,0 $\mu$m.

11. Feuille selon l'une des revendications 1 à 10,
    **caractérisée en ce que** la feuille présente une tendance à l'adhérence à la fois contre elle-même et également contre un métal, inférieure à 1,0 N/15 mm.

12. Procédé de fabrication d'une feuille selon la revendication 1, dans lequel les masses fondues correspondant aux couches individuelles A, B et C de la feuille sont co-extrudées par une buse plate, la feuille ainsi obtenue est tirée pour être fixée sur un ou plusieurs cylindres, la feuille est ensuite étirée biaxialement dans le sens de la machine et dans le sens perpendiculaire, la feuille étirée biaxialement est thermofixée et ensuite, enroulée, **caractérisé en ce que** l'on utilise pour la couche de couverture (A) un polyester dans lequel le rapport des signaux à 1040 cm$^{-1}$ et 1337 cm$^{-1}$ dans le spectre ATR est supérieur à 2,2 et la feuille est revêtue après l'étirement dans le sens de la machine et avant l'étirement, dans le sens perpendiculaire, avec une émulsion de revêtement acrylique.

13. Utilisation d'une feuille selon la revendication 1, comme feuille pouvant être estampée.

14. Utilisation selon la revendication 13, comme feuille d'emballage.

**15.** Utilisation selon la revendication 13, comme pellicule de sûreté.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4913858 A
- US 4091150 A
- US 5728347 A
- US 5800150 A
- EP 1291154 A
- EP 1291155 A
- EP 115033 A
- EP 1138480 A

**In der Beschreibung aufgeführte Nicht-Patentliteratur**

- *Polymer Letters Edition,* 1974, vol. 12, 13-19